# EUROPEAN PATENT APPLICATION

(11) **EP 2 835 166 A1**
(43) Date of publication of application: **11.02.2015**
(21) Application number: 13773123.8
(22) Date of filing: 29.03.2013
(51) Int. Cl.: B01D 39/20, B01D 46/00, F01N 3/022

(54) **HONEYCOMB STRUCTURE**

(30) Priority: 05.04.2012 JP 2012086473
(71) Applicant: Sumitomo Chemical Co., Ltd, Chuo-ku, Tokyo 104-8260 (JP)
(72) Inventor: IWASAKI, Kentaro, Wroclaw 51317 (PL); YOSHINO, Hajime, Niihama-shi Ehime 792-8521 (JP)
(74) Representative: Vossius & Partner
(86) International application number: PCT/JP2013/059514
(87) International publication number: WO 2013/150971

(57) **Abstract**

A honeycomb structure 100 having a partition wall 112 that forms a plurality of first channels 110a and a plurality of second channels 110b is provided. The first channels 110a are open at a first end surface 100a and closed at a second end surface 100b. The second channels 110 are closed at the first end surface 100a and open at the second end surface 100b. The partition wall 112 has standard walls 112a, which separate the first channels 110a and the second channels 110b from each other, and a common wall 112b, which separates two first channels 110a adjacent to each other at the first end surface 100a, and the standard walls 112a are thicker than the common walls 112b.

## Description

### Technical Field

The present invention relates to a honeycomb structure used as a filter that purifies a gas.

### Background Art

A honeycomb structure is widely used as a filter that purifies an exhausted gas from an internal combustion engine, such as a diesel particulate filter (see Patent Literature 1, for example). Since soot removed from an exhaust gas builds up in the honeycomb structure, filter regeneration in which the soot is burned is required every fixed period. To burn soot, a large amount of hot combusted exhaust gas may be supplied to ignite the soot and burn it completely.

### Citation List

### Patent Literature

Patent Literature 1: Japanese Patent Application Laid-Open Publication No. 2009-202143

### Summary of Invention

### Technical Problem

When a honeycomb structure is heated beyond an acceptable level by burning the soot in the filter regeneration, excessive thermal stress may occur and break the honeycomb structure. To avoid such breakage, a technology for moderating the burning of the soot in the filter regeneration is required.

The present invention has been made in view of the problem described above, and an object of the present invention is to provide a honeycomb structure that allows soot to be mildly burned in filter regeneration.

### Solution to Problem

To achieve the object described above, the present invention relates to a honeycomb structure comprising a first end surface and a second end surface facing each other and a partition wall that forms a plurality of first channels and a plurality of second channels extending in a facing direction between the first end surface and the second end surface. The plurality of first channels are open at the first end surface and closed at the second end surface, and the second channels are closed at the first end surface and open at the second end surface. The plurality of first channels are so provided that the first channels surround the second channels and so disposed that the first channels are adjacent to the second channels, at the first end surface. The partition wall includes standard walls that separate the first channels and the second channels from each other and a common wall that separates two of the first channels adjacent to each other at the first end surface. The standard walls are thicker than the common walls.

According to the honeycomb structure described above, since the standard walls are formed to be thicker than the common walls, a gas having flowed through the openings at the first end surface into the first channels does not tend to pass through the standard walls as compared with a case where the standard walls are as thick as the common walls. Therefore, according to the honeycomb structure described above, when a hot gas flows into the first channels to burn soot in the filter regeneration, the burned gas (carbon dioxide gas, for example) produced by the burning does not tend to pass through the standard walls and exits into the second channels, whereby the burned gas that stays in the first channels suppresses further oxygen supply, and the burning of the soot is suppressed or the soot is burned mildly. As a result, a situation in which the honeycomb structure is heated beyond an acceptable level and damaged by excessive thermal stress does not occur, whereby the reliability of the honeycomb structure can be improved.

In the honeycomb structure according to the present invention, at least five of the first channels may be so provided that the at least five of the first channels surround the second channels and so disposed that the at least five of the first channels are adjacent to the second channels, at the first end surface.

According to the honeycomb structure described above, a high-opening-ratio, efficient channel arrangement is achieved.

In the honeycomb structure according to the present invention, all the standard walls between one of the second channels and the first channels that surround the second channel may be thicker than all the common walls between the first channels that surround the second channel.

According to the honeycomb structure described above, since all the standard walls around one of the second channel are thicker than all the common walls between the first channels that surround the second channel, the burned gas does not tend to exit from the first channels to the second channel, whereby soot can be burned more mildly.

In the honeycomb structure according to the present invention, areas formed by the common walls in the first channels may be smaller than areas formed by the standard walls in the first channels, in the partition wall that forms the first channels.

According to the honeycomb structure described above, since the areas of the common walls, which form the first channels, are smaller than the areas of the standard walls, which form the first channels, the soot layer that builds up on the common walls is thicker than the soot layer that builds up on the standard walls. As a result, when soot is burned in the first channels in the filter regeneration, burning of the soot layers having built up to a large thickness on the common walls are not proceeded so fast, whereby the soot is not burned up in a short period and hence the soot can be burned more mildly.

### Advantageous Effects of Invention

Any of the honeycomb structures according to the present invention allows soot to be mildly burned in filter regeneration.

### Brief Description of Drawings

[Figure 1] Figure 1 shows a honeycomb structure according to a first embodiment.
[Figure 2] Figure 2 is a cross-sectional view taken along the line II-II in Figure 1.
[Figure 3] Figure 3 is an enlarged view for describing the arrangement of channels at a first end surface.
[Figure 4] Figure 4 shows part of a first end surface of a honeycomb structure according to a second embodiment.
[Figure 5] Figure 5 is an enlarged view for describing the arrangement of channels of the honeycomb structure according to the second embodiment.
[Figure 6] Figure 6 shows part of a first end surface of a honeycomb structure according to a third embodiment.

### Description of Embodiments

Preferred embodiments of the present invention will be described below in detail with reference to the drawings.

### [First Embodiment]

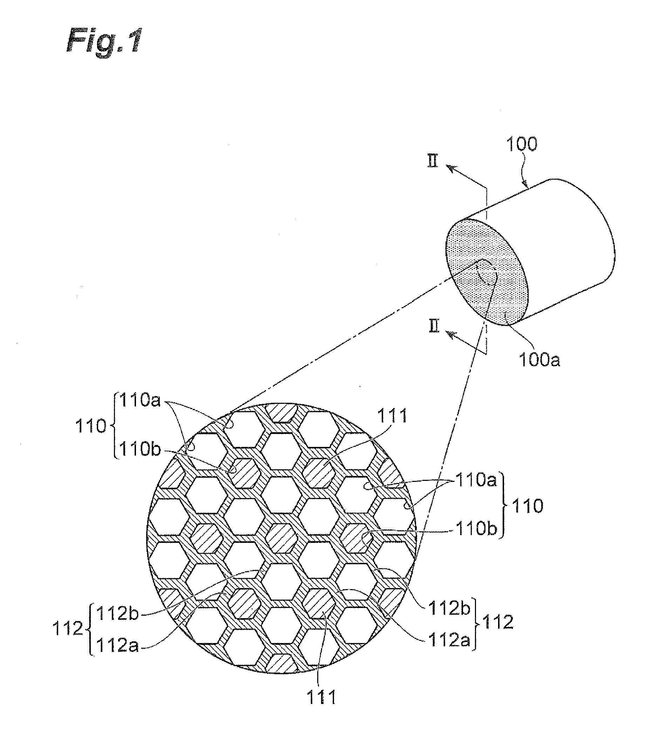

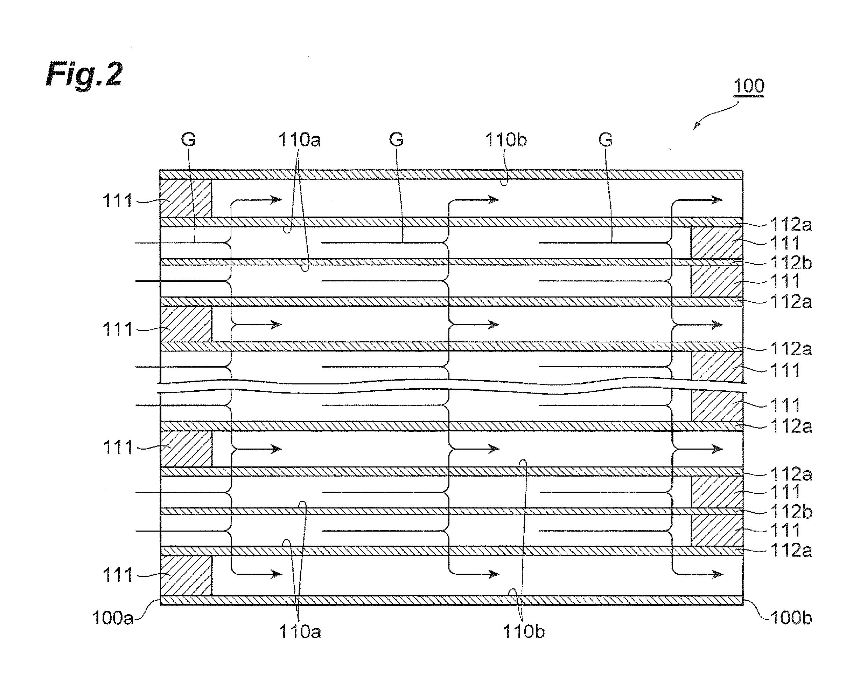

A honeycomb structure 100 according to a first embodiment is a cylindrical structure used as a filter that purifies an exhaust gas from an internal combustion engine, such as a diesel engine and a gasoline engine, as shown in Figs. 1 and 2. The cylindrical honeycomb structure 100 has a first end surface 100a and a second end surface 100b, which face each other, and a partition wall 112, which forms a plurality of channels 110.

The channels 110 are closed by closing members 111 at one of the first end surface 100a and the second end surface 100b, as shown in Figure 2. Specifically, the plurality of channels 110 are grouped into first channels 110a, which are open at the first end surface 100a and closed at the second end surface 100b, and second channels 110b, which are closed at the first end surface 100a and open at the second end surface 100b.

The plurality of first channels 110a and the plurality of second channels 110b are channels extending in the direction in which the first end surface 100a and the second end surface 100b face each other and have a regular hexagonal cross-sectional shape (cross-sectional shape perpendicular to the direction in which channels 110a and 110b extend).

The first channels 110a and the second channels 110b are so arranged that the first channels 110a surround the second channels 110b at the first end surface 100a. Specifically, six first channels 110a adjacent to each other are so arranged that they surround one second channel 110b at the first end surface 100a. Each of the six first channels 110a are so arranged that they are adjacent to the one second channel 110b.

The thus configured honeycomb structure 100 is disposed, for example, in an exhaust gas channel of an internal combustion engine with the first end surface 100a located on the gas upstream side (side facing internal combustion engine) and the second end surface 100b located on the gas downstream side (exhaust side). The arrows G represent a primary flow of the exhaust gas passing through the honeycomb structure 100, which functions as a filter.

The exhaust gas from the internal combustion engine flows into the first channels 110a through the openings at the first end surface 100a, as indicated by the arrows G. The gas having flowed into the channels 110a passes through the partition wall 112 into the second channels 110b because the channels 110a are closed at the second end surface 100b. At this point, soot in the exhaust gas is trapped by the partition wall 112. The gas from which soot has been removed passes through the second channels 110b and flows outside through the openings of the second channels 110b at the second end surface 100b.

The honeycomb structure 100, which functions as a filer, is composed, for example, of a porous ceramic material (20 µm in average pore diameter or smaller, for example). Examples of the ceramic material used for the honeycomb structure 100 include oxides such as alumina, silica, mullite, cordierite, glass, and aluminum titanate; silicon carbide; silicon nitride; and metals. The aluminum titanate can further contain magnesium and/or silicon.

The honeycomb structure 100 is produced by burning a green molded body (pre-burned molded body) which becomes the ceramic materials described above after extrusion molding thereof, and then performing a predetermined closing treatment. The green molded body contains, for example, inorganic compound source powder that is a raw material of the ceramic material, organic binder such as methyl cellulose, and an additive added as required.

In the case of a green molded body made of an aluminum titanate, the inorganic compound source powder contains aluminum source powder such as α-alumina powder and titanium source powder such as anatase-type or rutile-type titania powder and can further contain magnesium source powder such as magnesia powder, and magnesia spinel powder, and/or silicon source power such as silicon oxide powder and glass flit, as required.

Examples of the organic binder include celluloses such as methyl cellulose, carboxymethyl cellulose, hydroxyalkyl methyl cellulose, and sodium carboxymethyl cellulose; alcohols such as polyvinyl alcohol; and lignin sulfonate.

Examples of the additive include a pore former, a lubricant, a plasticizer, a disperser, and a solvent.

Examples of the pore former include carbon materials such as graphite; resins such as polyethylene, polypropylene, polymethylmethacrylate; plant materials such as starch, the shell of a nut, the shell of a walnut and corn; ice; and dry ice.

Examples of the lubricant and the plasticizer include alcohols such as glycerin; higher fatty acids such as caprylic acid, lauric acid, palmitic acid, arachidic acid, oleic acid and stearic acid; metal salt stearates such as aluminum stearate, and polyoxy alkylene alkyl ether (POAAE).

Examples of the disperser include inorganic acids such as nitric acid, hydrochloric acid and sulfuric acid; organic acids such as oxalic acid, citric acid, acetic acid, malic acid and lactic acid; alcohols such as methanol, ethanol and propanol; surfactant such as polycarboxylic aluminum.

Examples of the solvent include alcohols such as methanol, ethanol, butanol and propanol; glycols such as propylene glycol, polypropylene glycol and ethylene glycol; and water.

The material of the closing members 111 may be the same as the material of the green molded body described above or may be different therefrom. The closing members 111 may instead be composed of a material through which the exhaust gas from the internal combustion engine cannot pass.

The channels 110 and the partition wall 112 of the honeycomb structure 100 will subsequently be described in detail.

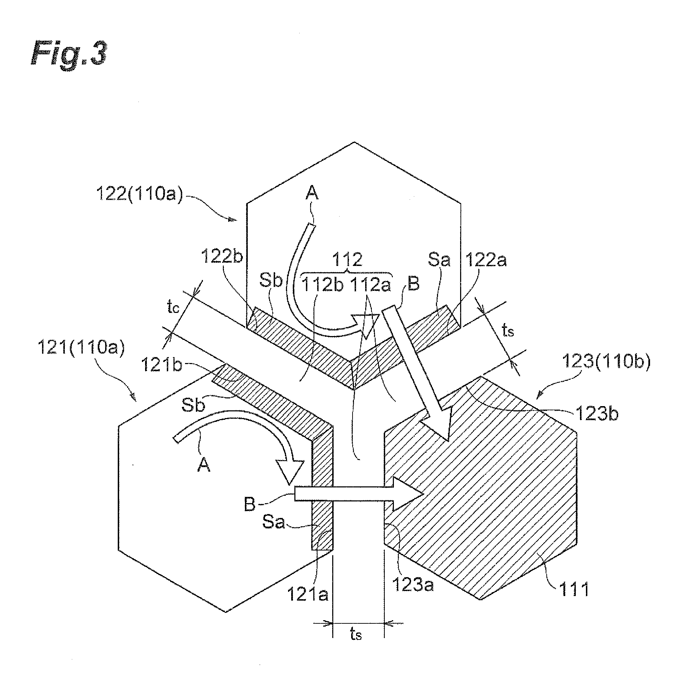

Figure 3 is a figure for describing the arrangement of the channels 110 at the first end surface 100a. Figure 3 shows channels 121 and 122 of the plurality of first channels 110a and a channel 123 of the plurality of second channels 110b by way of example.

The partition wall 112 has standard walls 112a, which separate the first channels 121 and 122 from the second channel 123 adjacent to each other, and a common wall 112b, which separates the adjacent two first channels 121 and 122 from each other, as shown in Figure 3. The first channels 121 and 122 are formed by the standard walls 112a and the common walls 112b, and the second channel 123 is formed only by the standard walls 112a.

In the honeycomb structure 100, the thickness tₛ of the standard wall 112a is set to be greater than the thickness t_{c} of the common walls 112b. That is, the distance between the first channels 121, 122 and the second channel 123 is set to be greater than the distance between the first channels 121 and 122. A gas in the first channels 121 and 122 therefore does not tend to flow into the second channel 123 as compared with a case where the thickness tₛ of the standard walls 112a is equal to the thickness t_{c} of the common walls 112b.

The thickness of all the standard walls 112a between the plurality of first channels 110a, which surround the second channels 123, and the second channels 123 is set to be greater than the thickness of all the common walls 112b between the first channels 110a adjacent to each other at the first end surface 100a, as in the case of the first channels 121 and 122, as shown in Figure 1. The thickness tₛ of the standard walls 112a and the thickness t_{c} of the common walls 112b preferably satisfy the relationship 0. 1<t_{c}/tₛ<0.9.

The exhaust gas having flowed through the openings at the first end surface 100a into the first channels 121 and 122 passes through the standard walls 112a, flows into the second channel 123, and then exits outside through the openings at the second end surface 100b, as described above.

In this process, soot contained in the exhaust gas is trapped by the standard walls 112a, and a soot layer Sa shown in Figure 3 is formed by the trapped soot. The soot layer Sa is formed on standard wall surfaces 121a and 122a of the first channels 121 and 122. The standard wall surface 121 a is a surface that is part of the first channel 121 and formed by the corresponding standard wall 112a, and the standard wall surface 122a is a surface that is part of the first channel 122 and formed by the corresponding standard wall 112a. Similarly, the second channel 123 has standard wall surfaces 123a and 123b formed by the standard walls 112a.

The standard wall surface 123a of the second channel 123 is a surface that faces the standard wall surface 121a of the first channel 121 with the corresponding standard wall 112a therebetween. Further, the standard wall surface 123b of the second channel 123 is a surface that faces the standard wall surface 122a of the first channel 122 with the corresponding standard wall 112a therebetween. In other words, the portion of the partition wall 112 that is sandwiched between the standard wall surfaces 121a, 122a of the first channels 121 and 122 and the standard wall surfaces 123a, 123b of the second channel 123 forms the standard walls 112a.

The thickness tₛ of the standard walls 112a corresponds to the distance between the standard wall surfaces 121a, 122a of the first channels 121, 122 and the standard wall surfaces 123a, 123b of the second channel 123.

Further, part of the soot contained in the exhaust gas adheres to the common wall 112b while flowing through the first channels 121 and 122 to form a soot layer Sb. The soot layer Sb is formed on common wall surfaces 121b and 122b of the first channels 121 and 122. The common wall surface 121b is a surface that is part of the first channel 121 and formed by the common wall 112b, and the common wall surface 122b is a surface that is part of the first channel 122 and formed by the common wall 112b.

The common wall surface 121b and the common wall surface 122b face each other with the common wall 112b therebetween. In other words, the portion of the partition wall 112 that is sandwiched between the common wall surface 121b and the common wall surface 122b forms the common wall 112b.

The thickness t_{c} of the common wall 112b corresponds to the distance between the common wall surface 121b and the common wall surface 122b. Although not shown, soot builds up on the other surfaces that form the first channels 121 and 122.

In the honeycomb structure 100, filter regeneration that allows restoration of the filter function by burning the soot layers Sa and Sb and other soot layers with a hot gas is performed. The arrows A and B indicate an example of the flow of the hot gas in the filter regeneration.

In the filter regeneration, after a hot gas produced by the internal combustion engine flows into the first channels 121 and 122, part of the hot gas circulates as indicated by the arrows A and moves along the surfaces of the first channels 121 and 122 to facilitate burning of the soot layers Sb. A burned gas produced by the burning of the soot layers Sb passes through the standard walls 112a while burning the soot layers Sa and flows into the second channel 123, as indicated by the arrows B. The burned gas having flowed into the second channel 123 exits outside through the opening at the second end surface 100b. In addition, part of the hot gas directly flows to the soot layers Sa along the arrows B, passes through the standard walls 112a while burning the soot layers Sa, flows into the second channel 123, and exits outside.

In the honeycomb structure 100 according to the first embodiment described above, since the thickness ts of the standard walls 112a is set to be greater than the thickness t_{c} of the common walls 112b, the gas having flowed through the openings at the first end surface 100a into the first channels 110a does not tend to pass through the standard walls 112a as compared with a case where the thickness tₛ of the standard walls 112a is equal to the thickness t_{c} of the common walls 112b, and the gas does not tend to enter the second channels 110b, which are open at the second end surface 100b. Therefore, according to the honeycomb structure 100, when the hot gas flows into the first channels 110a to burn soot in the filter regeneration, the burned gas (carbon dioxide gas, for example) produced by the burning does not tend to pass through the standard walls 112a or exit into the second channels 110b, whereby the burned gas that stays in the first channels 110a suppresses further oxygen supply, and the burning of the soot is suppressed or the soot is burned mildly. As a result, a situation in which the honeycomb structure 100 is heated beyond an acceptable level and damaged by excessive thermal stress does not occur, whereby the reliability of the honeycomb structure 100 can be improved.

Further, since six first channels 110a are so disposed that they surround one second channel 110b and are adjacent to the second channel 110b at the first end surface 100a, the channels 110 having a hexagonal cross-sectional shape can be efficiently arranged with a high opening ratio.

### [Second Embodiment]

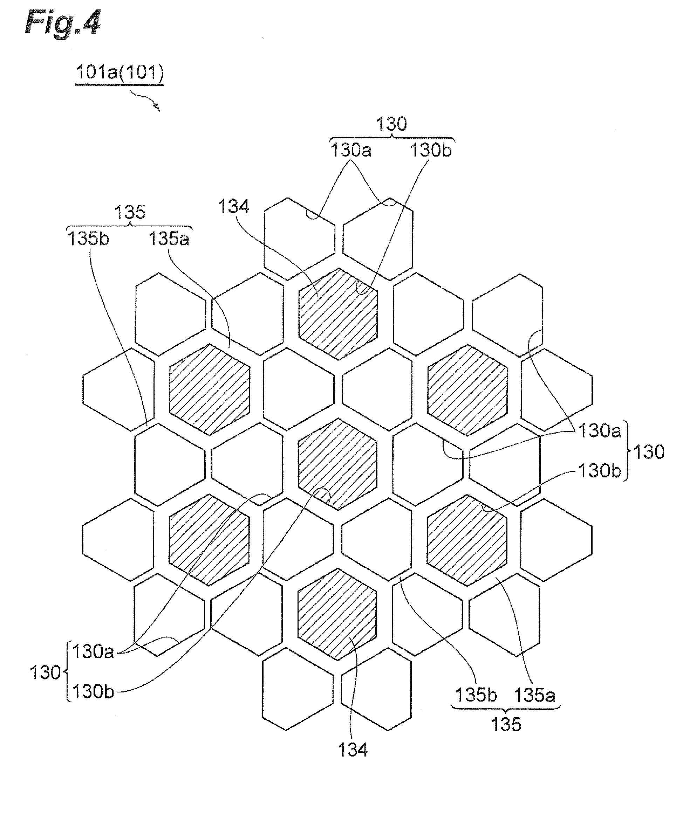

A honeycomb structure 101 according to a second embodiment differs from the honeycomb structure 100 according to the first embodiment in terms of the cross-sectional shape of the first channels. Figure 4 shows part of a first end surface 101a of the honeycomb structure 101 according to the second embodiment.

A plurality of channels 130 of the honeycomb structure 101 according to the second embodiment are grouped into first channels 130a, which are open at the first end surface 101a and closed at a second end surface (not shown), and second channels 130b, which are closed at the first end surface 101a and open at the second end surface, as shown in Figure 4. The second channels 130b are closed by closing members 134.

The first channels 130a and the second channels 130b are so disposed at the first end surface 101 a that the first channels 130a surrounds the second channels 130b. Specifically, six first channels 130a adjacent to each other are so disposed at the first end surface 101a that they surround one second channel 130b. The six first channels 130a are so disposed that each of them is adjacent to the one second channel 130b.

The second channels 130b are channels having a regular hexagonal cross-sectional shape as in the first embodiment. On the other hand, the first channels 130a have a ordered hexagonal cross-sectional shape (for example, hexagonal shape having a shorter edge facing a edge of the hexagonal cross-sectional shape of an adjacent second channel 130b and a longer edge longer than the shorter edge with the longer edges and the shorter edges facing each other).

The first channels 130a and the second channels 130b are so disposed that the longer edges of the ordered hexagonal cross-sectional shape of the six first channels 130a faces each edge of the regular hexagonal cross-sectional shape of the second channel 130b.

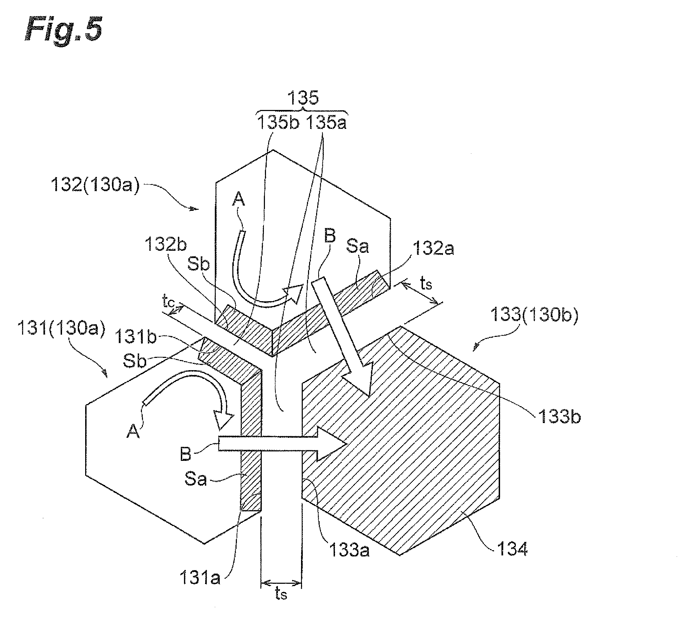

Figure 5 is a figure for describing the arrangement of the channels 130 at the first end surface 101a. Figure 5 shows channels 131 and 132 of the plurality of the first channels 130a and a channel 133 of the plurality of the second channels 130b by way of example.

A partition wall 135 is grouped into standard walls 135a, which separate the first channels 131, 132 from the second channel 133 adjacent to each other, and a common wall 135b, which separates the adjacent two first channels 131 and 132 from each other, as shown in Figure 3.

The first channels 131 and 132 are channels formed by the standard walls 135a and the common walls 135b, and the second channel 133 is a channel formed only by the standard walls 135a.

In the honeycomb structure 101 according to the second embodiment, the thickness tₛ of the standard walls 135a is set to be greater than the thickness t_{c} of the common walls 135b, as in the first embodiment. That is, the distance between the first channels 131, 132 and the second channel 133 is set to be greater than the distance between the first channels 131 and 132.

Further, in the honeycomb structure 101 according to the second embodiment, the area of a common wall surface 131b of the first channel 131 is set to be smaller than the area of a standard wall surface 131 a of the first channel 131. That is, the area formed by the common wall 135b is smaller than the area formed by the standard wall surface 131a, in the standard walls 135a and the common walls 135b that form the first channel 131. This means that the area of the standard wall surface 131a, through which burned soot gas exits, is greater than the area of the common wall surface 131b, on which soot builds up.

Further, also in the honeycomb structure 101 according to the second embodiment, the thickness tₛ of the standard wall 135a between the standard wall surface 131 a of the first channel 131 and a standard wall surface 133a of the second channel 133 is uniform and set to be greater than the thickness t_{c} of the common walls 135b.

In the honeycomb structure 101 according to the second embodiment described above, since the thickness tₛ of the standard walls 135a is set to be greater than the thickness t_{c} of the common walls 135b, the burned gas in the first channels 131 and 132 does not tend to pass through the standard walls 135a in the filter regeneration as compared with a case where the thickness tₛ of the standard walls 135a is equal to the thickness t_{c} of the common walls 135b. Therefore, in the honeycomb structure 101 according to the second embodiment, further oxygen supply into the first channels 131 and 132 is suppressed from the same reason as in the honeycomb structure 100 according to the first embodiment, whereby the burning of the soot is suppressed or the soot is burned mildly.

Further, in the honeycomb structure 101 according to the second embodiment, since the area of the common wall surface 131b, which forms the first channel 131, is smaller than the area of the standard wall surface 131a, which forms the first channel 131, the soot layer that builds up on the common wall surface 131b is thicker than the soot layer that builds up on the standard wall surface 131a. As a result, when the hot gas flows into the first channel 131 in the filter regeneration and the soot is burned from the surface of the soot layer Sb as indicated by the arrow A, burning of the soot layer Sb having built up to a large thickness is not proceeded so fast, whereby the soot is not burned up in a short period and hence the soot can be burned more mildly.

Further, in the honeycomb structure 101 according to the second embodiment, which employs an asymmetric cell structure (asymmetric grid structure) having channels having different cross-sectional shapes, the filter area per unit volume of the filter can be larger than that of a symmetric cell structure. A large filter area reduces loss in the pressure of the exhaust gas, which is advantageous in improvement in fuel consumption of the internal combustion engine.

### [Third Embodiment]

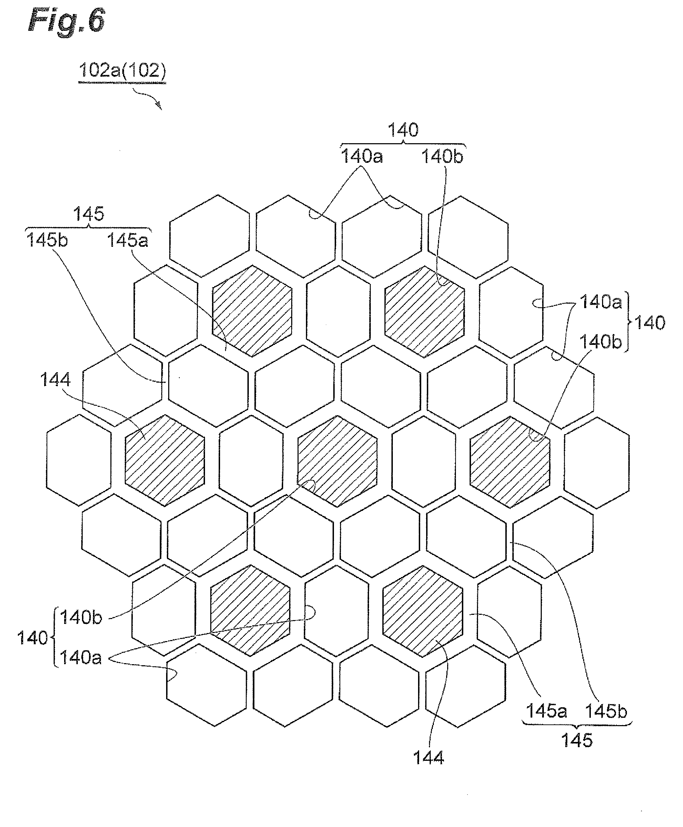

A honeycomb structure 102 according to a third embodiment differs from the honeycomb structure 101 according to the second embodiment in terms of the cross-sectional shape of first channels 140a. Figure 6 shows part of a first end surface 102a of the honeycomb structure 102 according to the third embodiment.

Specifically, the first channels 140a of the honeycomb structure 102 according to the third embodiment have a flat hexagonal cross-sectional shape (for example, hexagonal shape having a longer edge facing a edge of a regular hexagonal cross-sectional shape of an adjacent second channel 140b and a shorter edge shorter than the longer edge with two longer edges facing each other and two sets of two shorter edges facing each other), as shown in Figure 6.

The first channels 140a and the second channels 140b are so disposed that one of the longer edges of the flat hexagonal cross-sectional shape of each of six first channels 140a faces the corresponding edge of the regular hexagonal cross-sectional shape of the second channel 140b.

In the honeycomb structure 102 according to the third embodiment, standard walls 145a are thicker than common walls 145 b, as in the first embodiment. Viewed from each of the first channels 140a, the standard walls 145a are a part of the partition wall corresponding to the respective shorter edges of the flat hexagonal cross-sectional shape, and the common wall 145b is a part of the partition wall corresponding to the shorter edges of the flat hexagonal cross-sectional shape.

In the honeycomb structure 102 according to the third embodiment, the standard walls 145a and the common walls 145b, which form each of the first channels 140a, are so configured that the area formed by each of the common walls 145b is smaller than the area formed by a standard wall surface 141 a, as in the second embodiment, as in the honeycomb structure 102 according to the second embodiment.

The honeycomb structure 102 according to the third embodiment described above can also provide the same advantageous effects provided by the honeycomb structure 101 according to the second embodiment.

The embodiments according to the present invention have been described above, but the present invention is not limited thereto. For example, the honeycomb structure does not necessarily have a cylindrical shape and may have a columnar shape having, for example, an oval or polygonal cross-sectional shape. Further, each of the channels does not necessarily have a hexagonal cross-sectional shape and may have any other polygonal shape or a circular or elliptical shape. Moreover, the cross-sectional shape of the plurality of first channels may differ from the cross-sectional shape of the plurality of second channels, and each of the plurality of first channels (or plurality of second channels) may contain a channel having a different cross-sectional shape.

Further, the arrangement of the channels are not limited to those described above. From a viewpoint of efficiency, at least five first channels may be so provided that they surround one second channel and are adjacent thereto at the first end surface. In the second embodiment, which has been described with reference to the case where the area of the common wall surface that forms each of the first channels is smaller than the area of the standard wall surface that forms the first channel, but the area of the common wall surface that forms each of the first channels may be greater than the area of the standard wall surface that forms the first channel.

Further, the thickness of the standard walls may vary depending on the position therealong, and the thickness of the common walls may vary depending on the position therealong. In this case, a minimum thickness of all the standard walls that form one second channel only needs to be greater than a maximum thickness of all the common walls between the first channels that surround the second channel.

### Industrial Applicability

The present invention is applicable to a honeycomb structure that allows soot to be mildly burned in filter regeneration.

### Reference Signs List

100, 101, 102 ... Honeycomb structure, 100a, 101a, 102a ... First end surface, 100b ... Second end surface, 110, 130, 140 ... Channel, 110a, 121, 122, 130a, 131, 132, 140a, 141, 142 ... First channel, 110b, 123, 130b, 133 ... Second channel, 111 ... Closing member, 112, 135, 145 ... Partition wall, 112a, 135a, 145a ... Standard wall, 112b, 135b, 145b ... Common wall, 121a, 122a, 123a, 123b, 131a, 132a ... Standard wall surface, 121b, 122b, 131b, 132b ... Common wall surface, Sa, Sb ... Soot layer

## Claims

1. A honeycomb structure comprising:
a first end surface and a second end surface facing each other; and
a partition wall that forms a plurality of first channels and a plurality of second channels extending in a facing direction between the first end surface and the second end surface,
wherein the plurality of first channels are open at the first end surface and closed at the second end surface,
the second channels are closed at the first end surface and open at the second end surface,
the plurality of first channels are so provided that the first channels surround the second channels and so disposed that the first channels are adjacent to the second channels at the first end surface, at the first end surface ,
the partition wall includes standard walls that separate the first channels and the second channels from each other and a common wall that separates two of the first channels adjacent to each other at the first end surface, and
the standard walls are thicker than the common walls.

2. The honeycomb structure according to claim 1,
wherein at least five of the first channels are so provided that the at least five of the first channels surround the second channels and so disposed that each of the at least five of the first channels is adjacent to the second channels at the first end surface, at the first end surface.

3. The honeycomb structure according to claim 1 or 2,
wherein all the standard walls between one of the second channels and the first channels that surround the second channel are thicker than all the common walls between the first channels that surround the second channel.

4. The honeycomb structure according to any one of claims 1 to 3,
wherein areas formed by the common walls in the first channels are smaller than areas formed by the standard walls in the first channels, in the partition wall that forms the first channels.
